# EUROPEAN PATENT SPECIFICATION

(11) **EP 0 598 150 B1**
(45) Date of publication and mention of the grant of the patent: **15.01.1997**
(21) Application number: 92310416.0
(22) Date of filing: 16.11.1992
(51) Int. Cl.: F04D 29/34, F16D 1/06

(54) **A fan blade mounting adaptor ring for a ceiling fan motor**
Adapterring für Lüfterflügel eines Deckenlüftermotors
Anneau-adapteur pour les pales d'un ventilateur pour moteur d'un ventilateur de plafond

(43) Date of publication of application: 25.05.1994
(73) Proprietor: CROMPTON GREAVES LIMITED, Maharashtra, Bombay 400023 (IN)
(72) Inventor: Kamath, Kasargod Shrikant, Ponda Goa 403 401 (IN); Rodrigues, Ashley Cajetan, Bombay 400049 Maharashtra (IN)
(74) Representative: MacGregor, Gordon

(56) References cited:
- GB-A- 872 754
- GB-A- 2 069 622
- US-A- 4 511 310
- US-A- 4 850 799

## Description

This invention relates to a ceiling fan assembly.

A ceiling fan consists of, among other parts, a fan motor and a set of fan blades. Normally a ceiling fan is supplied with the parts thereof disassembled and the parts are assembled together at the customer's place at the time of installing the fan. The blades are mounted on the top end shield of the motor by screws secured in pairs of holes provided in the shanks of the blades and in corresponding pairs of threaded blade mounting holes provided in the top end shield of the motor. Usually a fan is associated with a set of 3 blades and the top end shield the motor thereof is provided with 3 pairs of corresponding threaded fan blades mounting holes to mount the set of 3 blades. If a customer wants to convert a particular ceiling fan with a particular set of blades, for instance, a ceiling fan with a set of 3 blades into a ceiling fan with a different set of blades, for instance, a ceiling fan with a set of 4, 5 or 6 blades it is not possible to do so as the motor of the particular ceiling fan does not have different sets of blades mounting holes to mount the different sets of 4, 5 or 6 blades. Thus a particular ceiling fan is associated with a particular set of blades only. In order to convert a particular ceiling fan with a particular set of fan blades into a ceiling fan with a different set of fan blades it is necessary to have a different fan motor provided with a different set of pairs of fan blade mounting holes in the top end shield thereof corresponding to the different set of blades, besides the different set of fan blades. A fan motor is the most expensive part of a ceiling fan. Therefore, it is not economical to have a separate fan motor for each different set of blades.

US-A-4511310 and US-A-4850799 relate to dampening vibrations in a fan and each discloses a fan with a ring mounted to the shield of the fan motor. Fan blades are mounted to the ring, rather than the shield, in order to dampen vibrations.

The object of the present invention is to provide a fan blades mounting adaptor ring in a ceiling fan assembly to facilitate mounting of different sets of fan blades on the fan motor.

According to the present invention there is provided a ceiling fan assembly as in Claim 1.

The precharacterising part of claim 1 is based on US-A-4511310, and relates to a ceiling fan assembly comprising a plurality of fan blades, to a motor having an upper end shield provided with first and second sets of threaded holes, the holes being spaced for mounting a predetermined maximum of said fan blades, a ring locatable on the shield and having a plurality of first holes located so that the ring can be secured to the shield in place of the fan blades by means of the first holes and the first set of threaded holes in the shield, and the ring having a plurality of threaded second holes for mounting said fan blades.

The distinguishing features of the invention are characterised in that the number of second holes is different from the number of holes in the second set, so that the ring can act as an adaptor ring to provide for mounting of a predetermined maximum number of said fan blades on said ring which is different from the predetermined maximum number of said fan blades that can be mounted by means of the first and second sets of threaded holes in said shield.

The following is a detailed description of the present invention with reference to the accompanying drawings, in which:
Figs 1 and 2 are plan and elevation of a fan blades mounting adaptor ring according to an embodiment.
Fig 3 is a plan of a fan blades mounting adaptor ring according to another embodiment;
Fig 4 is plan of the fan blades mounting adaptor ring according to another embodiment;
Figs 5 and 6 are plan and bottom view respectively of the fan blades mounting adaptor ring according to another embodiment;
Figs 7 and 8 are plan and bottom view, respectively of the fan blades mounting adaptor ring according to another embodiment;
Figs 9 and 10 are plan and bottom view respectively of the fan blades mounting adaptor ring according to another embodiment;
Fig 11 is plan elevation of a ceiling fan motor;
Fig 12 is plan elevation of the ceiling fan motor of Fig 11 with a set of 3 fan blades mounted on the top end shield thereof;
Fig 13 is plan elevation of the ceiling fan motor of Fig 11 with the adaptor ring of Figs 1 and 2 mounted on the top end shield thereof; and
Fig 14 is plan elevation of the ceiling fan motor of Fig 13 with a set of 4 fan blades mounted on the adaptor ring thereof.

In the accompanying drawings parts such as canopies or regulator of a ceiling fan have not been shown as such are not necessary for understanding the invention.

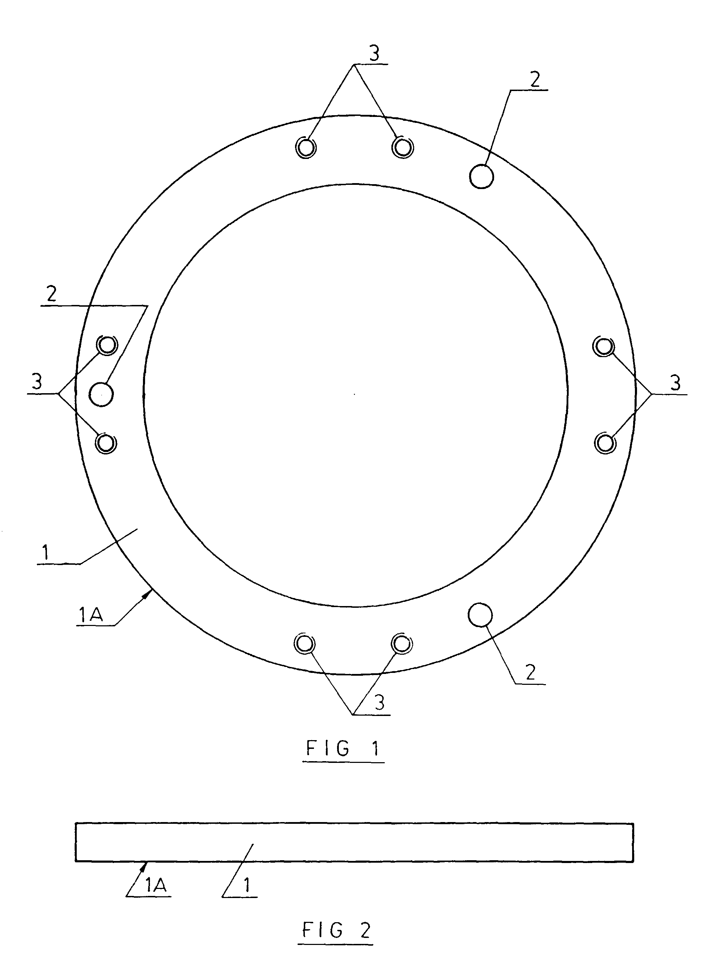

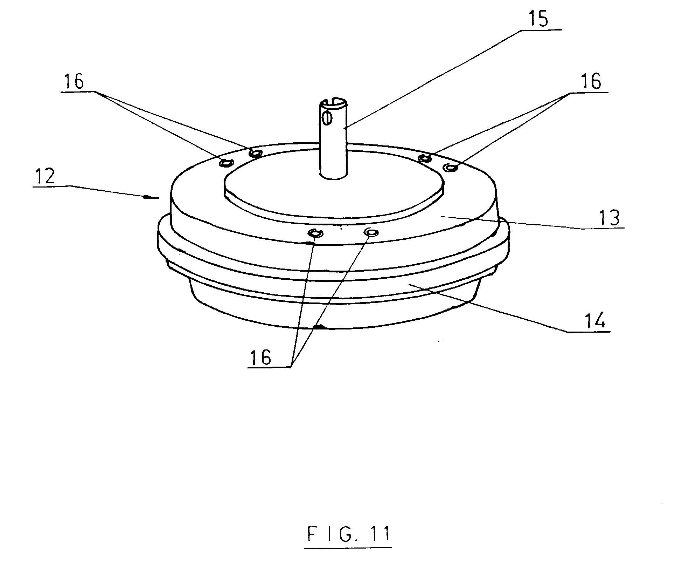

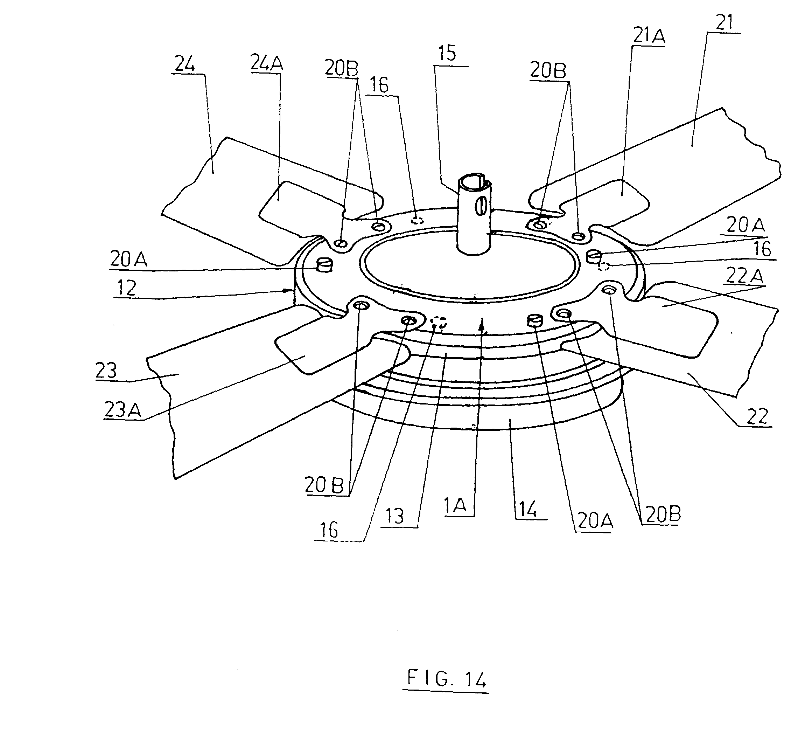

Referring to Figs 1 and 2, the adaptor ring 1A consists of an endless circular band 1 of a material such as aluminium adapted to be located on the top end shield of a ceiling fan motor 12 (See Figs 11 to 14) and provided with three ring mounting first holes 2 and four pairs of fan blades mounting threaded second holes 3.

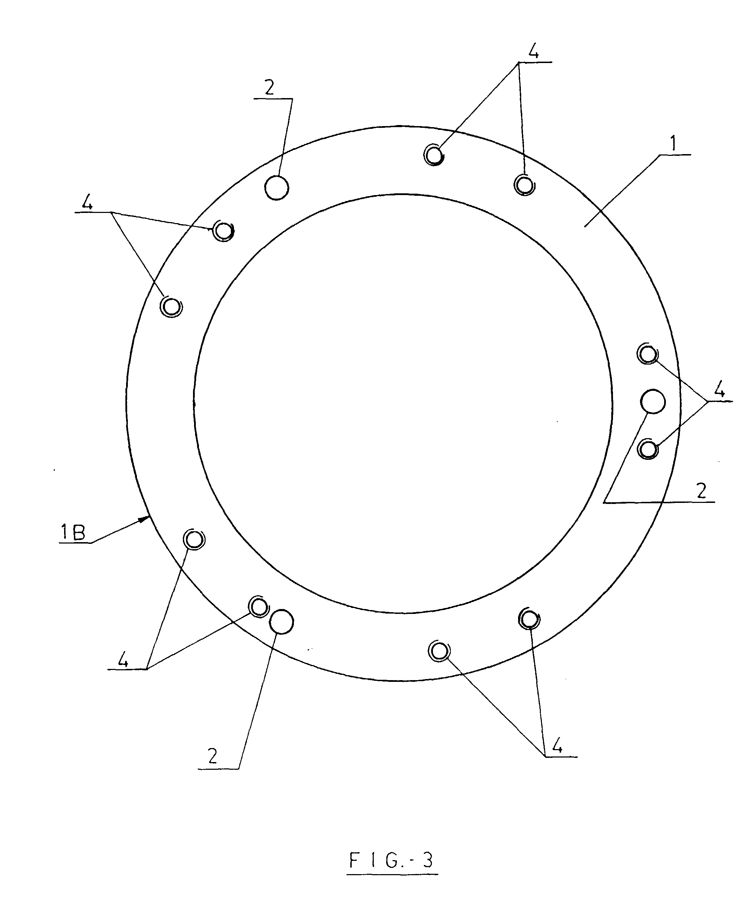

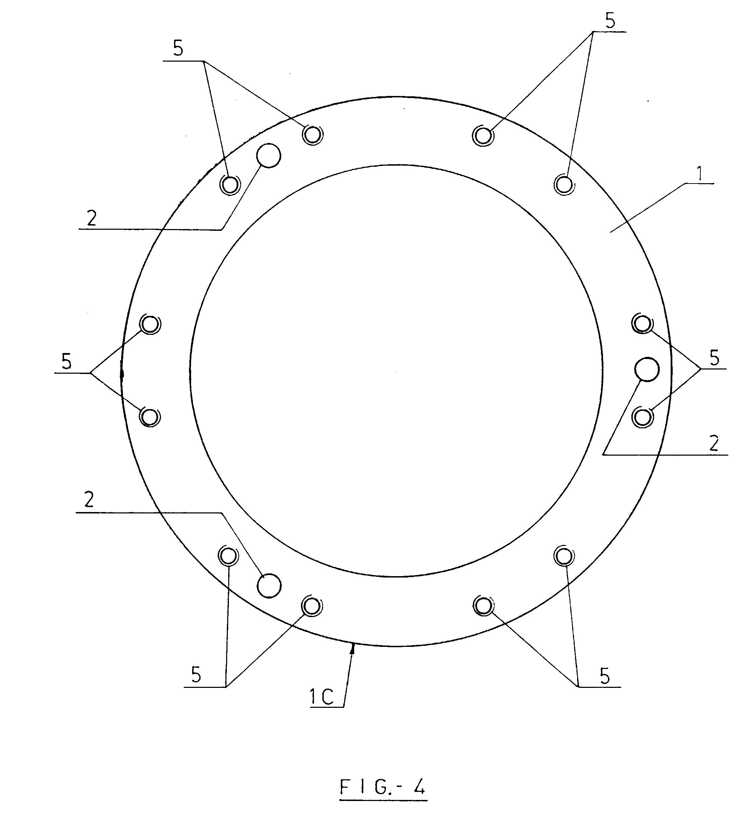

The adaptor rings 1B and 1C of Figs 3 and 4 respectively are similar to the adaptor ring 1A of Figs 1 and 2 except for the number of pairs of fan blades mounting threaded second holes. The ring 1B of Fig 3 is provided with five pairs of fan blades mounting threaded second holes 4 and the ring 1C of Fig 4 is provided with six pairs of fan blades mounting threaded second holes 5.

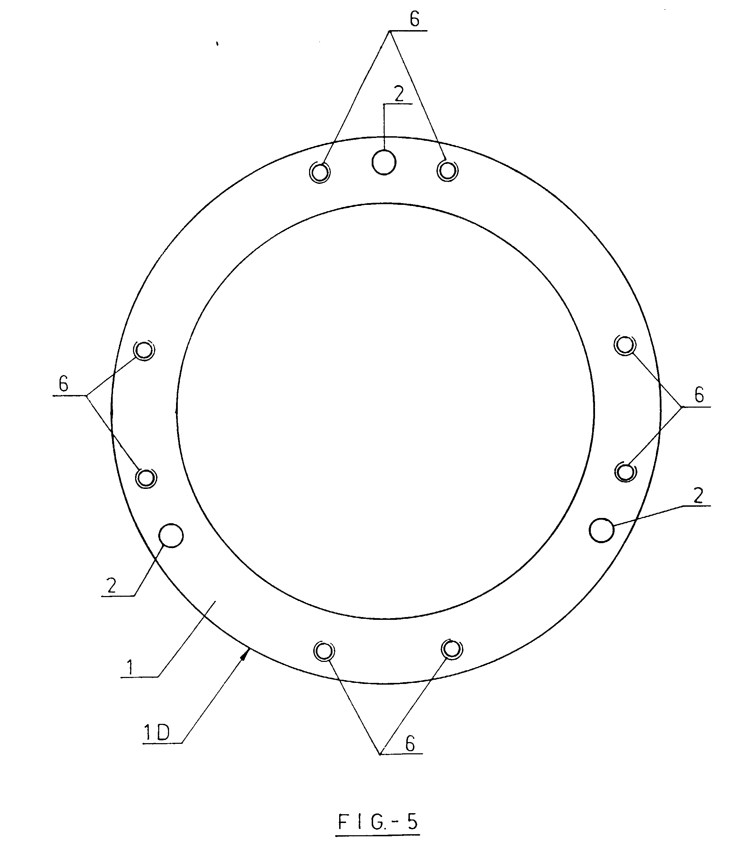

The adaptor rings 1D, 1E and 1F of Figs 5 and 6, Figs 7 and 8 and Figs 9 and 10 respectively are similar to the adaptor ring of Figs 1 and 2 except for the following differences :

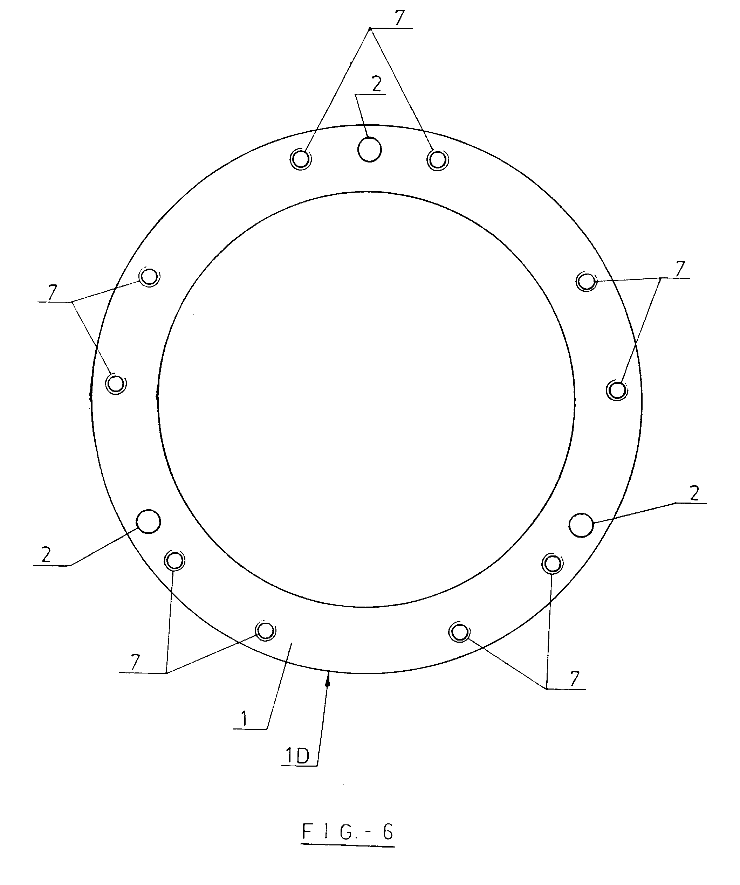

The ring 1D of Figs 5 and 6 is provided with four pairs of fan blades mounting threaded second holes 6 on the top surface thereof (See Fig 5) and five pairs of fan blades mounting threaded second holes 7 on the bottom surface thereof (See Fig 6).

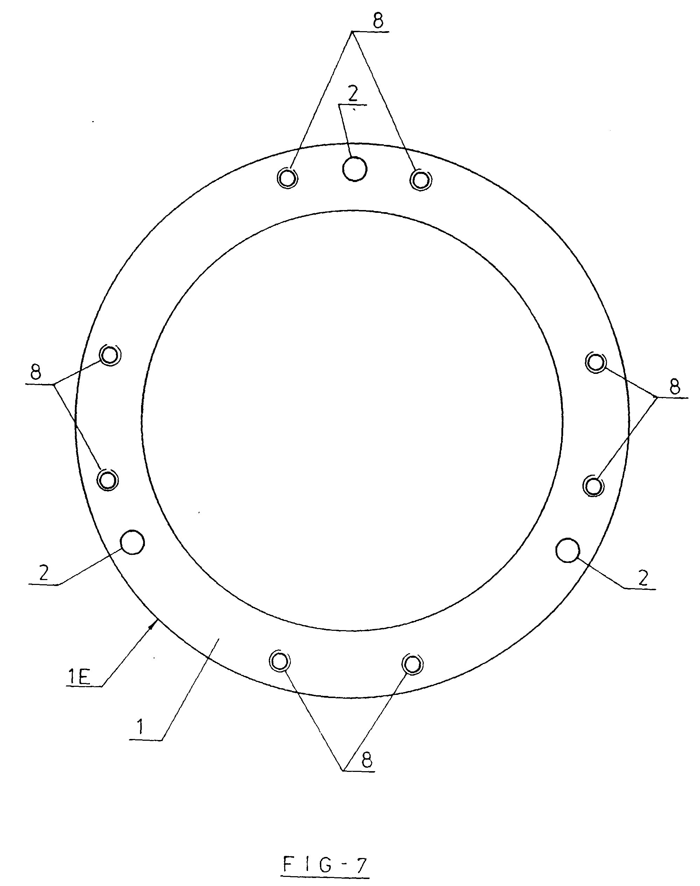

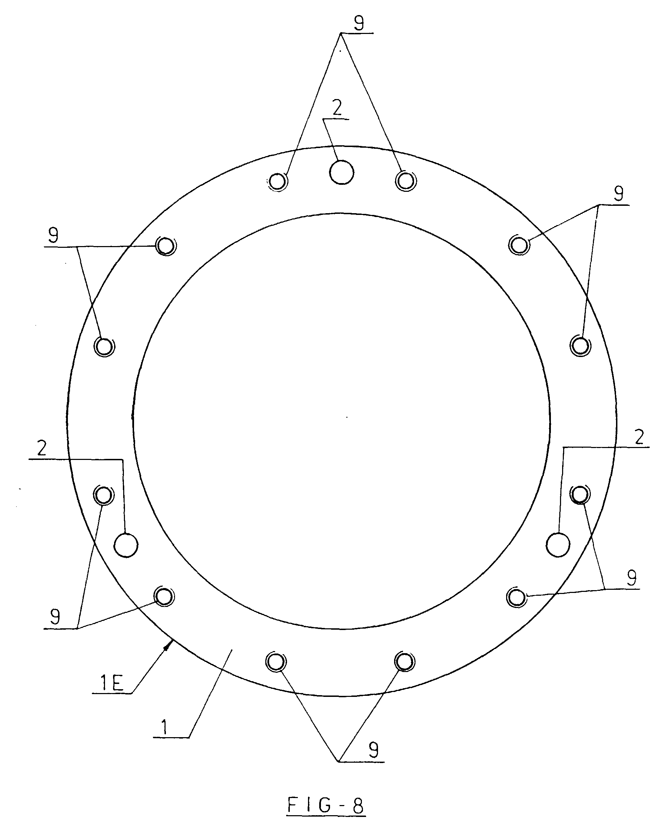

The ring 1E of Figs 7 and 8 is provided with four pairs of fan blades mounting threaded second holes 8 on the top surface thereof (See Fig 7) and six pairs of fan blades mounting threaded second holes 9 on the bottom surface thereof (See Fig 8).

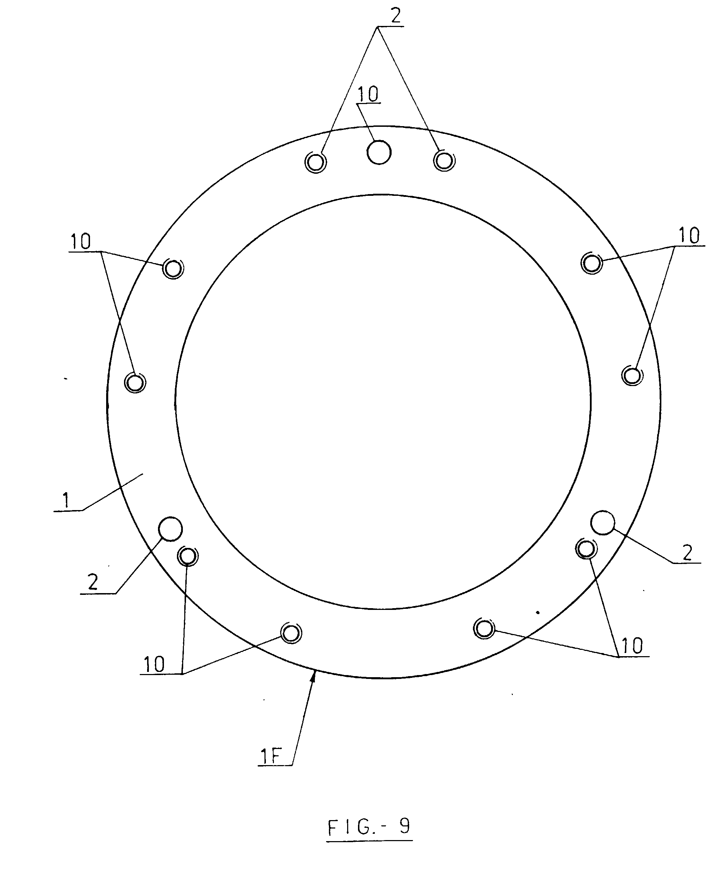

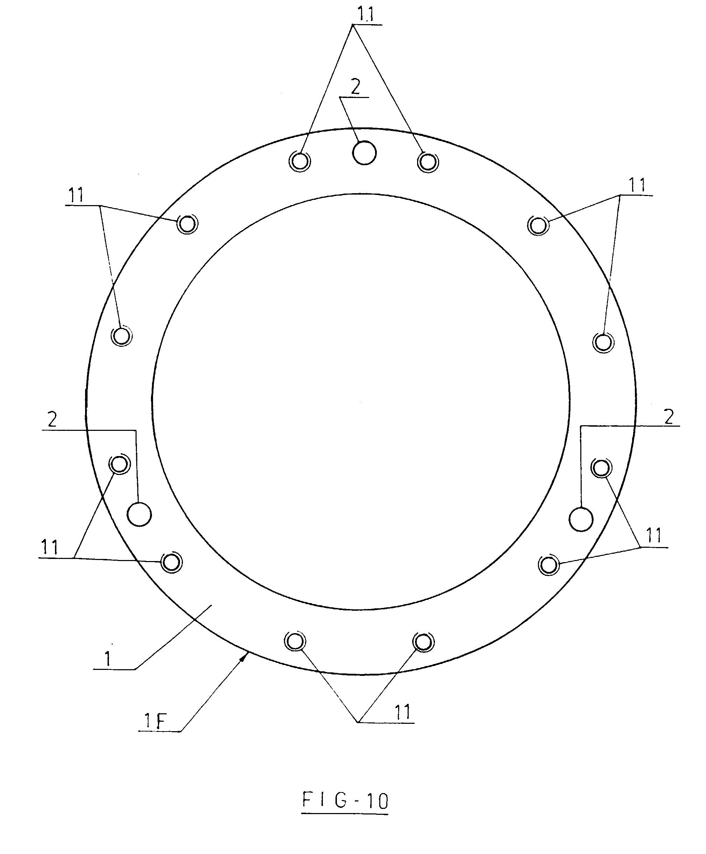

The ring 1F of Figs 9 and 10 is provided with five pairs of fan blades mounting threaded second holes 10 on the top surface thereof (See Fig 9) and six pairs of fan blades mounting threaded second holes 11 on the bottom surface thereof (See Fig 10).

The threaded second holes in the ring 1A of Figs 1 and 2, ring 1B of Fig 3, ring 1C of Fig 4, ring 1D of Figs 5 and 6, ring 1E of Figs 7 and 8 and ring 1F of Figs 9 and 10 may be blind or through holes. The threaded second holes in the top and bottom surfaces of each of the rings 1D, 1E and 1F may be offset with one another. One or more of the threaded second holes in the top and bottom surfaces of each of the rings 1D, 1E and 1F may be also common to both the surfaces.

Referring to Fig 11, the fan motor thereof is marked 12. The top end shield, bottom end shield and down rod of the fan motor are marked 13, 14 and 15 respectively. The top end shield is provided with three pairs of fan blades mounting threaded holes 16.

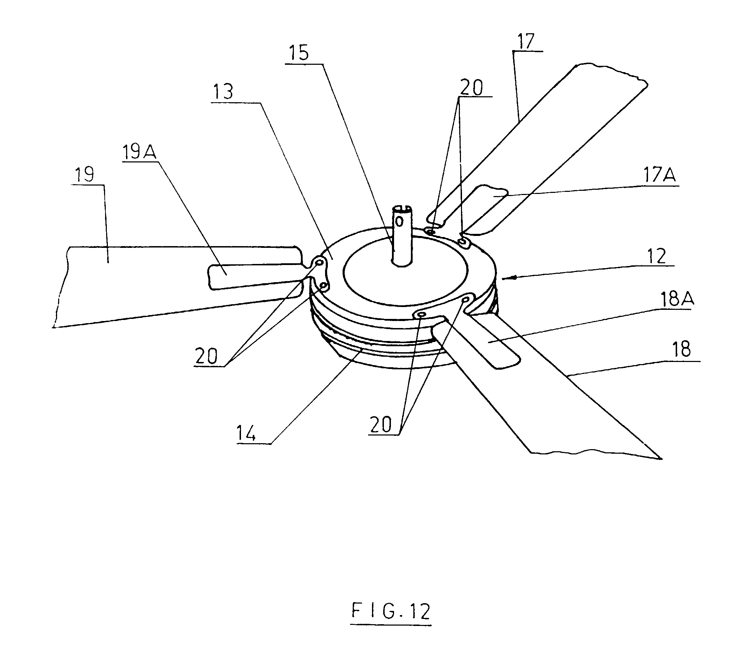

Referring to Fig 12, when a customer wants a three blades fan, a set of three fan blades 17, 18 and 19 is mounted on the top end shield of the fan motor of Fig 11 by fixing the shanks 17A, 18A and 19A of the blades 17, 18 and 19 respectively on the top end shield by securing screws 20 through pairs of holes (not marked) provided in the shanks and corresponding three pairs of fans blades mounting threaded holes provided in the top end shield.

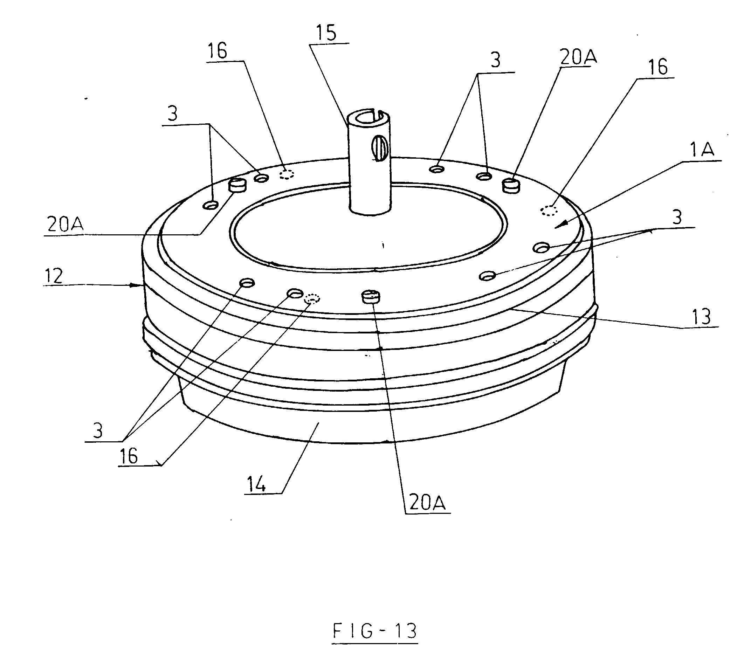

When the customer wants to convert the three blades fan of Fig 12 into a four blades fan, the three blades are dismantled from the fan motor by removing the screws 20. The adaptor ring 1A of Figs 1 and 2 is fixed on the top end shield by securing screws 20A through the first holes 2 in the adaptor ring 1A and three corresponding holes 16 in the top end shield (See Fig 13). The first holes 2 in the ring 1A are matched with the three holes 16 in the top end shield so that separate holes are not required to be provided in the top end shield to mount the ring 1A thereon (See Fig 13). It is, however, possible to provide the first holes 2 in the ring 1A in such a way that they mismatch with the holes 16 in the top end shield and to provide additional holes in the top end shield matching with the first holes in the ring 1A to fix the ring 1A on the top end shield with screws. A set of four blades 21, 22, 23 and 24 is fixed on the ring 1A by securing screws 20B through pairs of fan blades mounting holes (not marked) in the shanks 21A, 22A, 23A and 24A of the blades 21, 22, 23 and 24 respectively and corresponding four pairs of second holes 3 in the ring 1A. When the customer wants a five or six blades fan the set of four blades and ring 1A are dismantled from the top end shield by removing the screws 20B and ring 1B of Fig 3 or ring 1C of Fig 4 as the case may be, is mounted on the top end shield and a set of corresponding number of blades is mounted on the respective ring as described earlier.

In the case of the ring 1D of Figs 5 and 6 a set of four blades can be mounted on the top surface thereof and reversing the ring a set of five blades can be mounted on the bottom surface thereof. In the case of the ring 1E of Figs 7 and 8, a set of four blades can be mounted on the top surface thereof and reversing the ring a set of six blades can be mounted on the bottom surface thereof. In the case of the ring 1F of Figs 9 and 10, a set of five blades can be mounted on the top surface thereof and reversing the ring a set of six blades can be mounted on the bottom surface thereof.

The adaptor ring facilitates mounting of different sets of fan blades on the same fan motor. Therefore a particular ceiling fan with a particular set of fan blades can be converted into a fan with different set(s) of fan blades with the adaptor ring and corresponding set of fan blades and without using separate fan motor(s). The adaptor ring is considerably cheap and economical as compared to a fan motor, besides being convenient and easy to handle.

The above embodiments are by way of examples and should not be construed to be limitative of the scope of the present invention. Several variations are possible in the above embodiments without deviating from the scope of the invention. For instance, more number of pairs of fan blades mounting threaded second holes can be provided in the adaptor ring to mount sets of corresponding number of blades thereof. Besides being circular, the adaptor ring may be of other shape such as square or rectangular. The adaptor ring also can be made up of a material such as brass. Such variations are within the scope of the present invention and its scope should be understood accordingly.

## Claims

1. A ceiling fan assembly comprising a plurality of fan blades (17 to 19), a motor (12) having an upper end shield (13) provided with first and second sets of threaded holes (16), the holes (16) being spaced for mounting a predetermined maximum of said fan blades (17 to 19), a ring (1) locatable on the shield (13) and having a plurality of first holes (2) located so that the ring can be secured to the shield in place of the fan blades by means of the first holes (2) and the first set of threaded holes (16) in the shield, and the ring having a plurality of threaded second holes (3) for mounting said fan blades,
characterised in that the number of second holes (3) is different from the number of holes in the second set, so that the ring can act as an adaptor ring (1) to provide for mounting of a predetermined maximum number of said fan blades on said ring which is different from the predetermined maximum number of said fan blades that can be mounted by means of the first and second sets of threaded holes in said shield (16).

2. A ceiling assembly according to Claim 1, wherein the threaded holes (16) in the shield comprise at least three pairs of adjacent holes, the pairs of holes being spaced around the ring, and the second holes (3) in the adaptor ring similar comprise pairs of adjacent holes, the number of pairs of second holes being greater than three.

## Patentansprüche

1. Deckenlüfter mit einer Mehrzahl von Lüfterflügeln (17 bis 19), mit einem Lüftermotor (12) mit einer oberen Endplatte (13) und einem ersten und einem zweiten Satz Gewindebohrungen (16), die beabstandet für die Montage einer vorher festgelegten Maximalanzahl von Lüfterflügeln (17 bis 19) angeordnet sind, und mit einem an der Endplatte (13) ansetzbaren streifenförmigen Ring (1) mit einer Mehrzahl erster Bohrungen (2), die so angeordnet sind, daß der Ring anstelle der Lüfterflügel an der Endplatte vermittels der Bohrungen (2) und des ersten Satzes der Gewindebohrungen (16) in der Endplatte befestigt werden kann, wobei der Ring eine Mehrzahl von Gewindelöchern (3) für die Befestigung der Lüfterflügel aufweist, **dadurch gekennzeichnet**, daß die Anzahl der Gewindelöcher (3) von der Anzahl der Gewindelöcher in den zweiten Satz abweicht, sodaß der Ring (1) als Adapterring (1A, 1B etc.) für die Montage einer festgelegten Maximalanzahl von Lüfterflügeln auf dem Adapterring nutzbar ist, die von der festgelegten Maximalanzahl Lüfterflügel abweicht, die vermittels des ersten und zweiten Satzes von Gewindebohrungen in der Endplatte (13) montierbar sind.

2. Deckenlüfter nach Anspruch 1, **dadurch gekennzeichnet**, daß die Gewindebohrungen (16) in der Endplatte mindestens aus drei Paaren benachbarter Gewindebohrungen bestehen, wobei die Paare über den Umfang des Rings verteilt angeordnet sind, und daß die Gewindebohrungen (3) in dem Adapterring in ähnlicher Weise benachbart angeordnete Gewindebohrungen aufweisen, deren Anzahl der Paare Gewindebohrungen größer als drei ist.

## Revendications

1. Agencement de ventilateur de plafond, comprenant une pluralité de pales de ventilateur (17 à 19), un moyen (12) ayant une protection d'extrémité (13) supérieure pourvue de premier et deuxième jeux de trous taraudés (16), les trous (16) étant espacés pour permettre le montage d'un nombre maximal prédéterminé desdites pales de ventilateur (17 à 19), un anneau (1) pouvant être disposé sur la protection (13) et ayant une pluralité de premiers trous (2) disposés de manière que l'anneau puisse être fixé à la protection, à la place des pales de ventilateur, au moyen des premiers trous (2), et du premier jeu de trous taraudés (16) ménagés dans la protection, et l'anneau ayant une pluralité de deuxièmes trous taraudés (3) pour monter lesdites pales de ventilateur,
caractérisé en ce que le nombre de deuxièmes trous (3) est différent du nombre de trous du deuxième jeu, de manière que l'anneau puisse servir d'anneau-adaptateur (1) pour permettre le montage d'un nombre maximal prédéterminé desdites pales de ventilateur sur ledit anneau, nombre qui est différent du nombre maximal prédéterminé desdites pales de ventilateur qui peuvent être montées au moyen des premier et deuxième jeux de trous taraudés dans ladite protection (16).

2. Agencement de plafond selon la revendication 1, dans lequel les trous taraudés (16) ménagés dans la protection comprennent au moins trois couples de trous adjacents, les couples de trous étant espacés autour de l'anneau, et les deuxièmes trous (3) ménagés dans l'anneau-adaptateur comprenant, de manière analogue, des couples de trous adjacents, le nombre de couples de deuxièmes trous étant supérieur à trois.
